# EUROPEAN PATENT SPECIFICATION

(11) **EP 3 130 460 B1**
(45) Date of publication and mention of the grant of the patent: **18.05.2022**
(21) Application number: 16275115.0
(22) Date of filing: 11.08.2016
(51) Int. Cl.: B32B 27/08, B32B 7/10, B32B 27/38, B32B 1/08

(54) **COMPOSITE MATERIAL**
VERBUNDSTOFFMATERIAL
MATÉRIAU COMPOSITE

(30) Priority: 14.08.2015 GB 201514505
(43) Date of publication of application: 15.02.2017
(73) Proprietor: Crompton Technology Group Limited, Solihul, West Midlands B90 4SS (GB)
(72) Inventor: POLLITT, Will, Solihull, West Midlands B90 4SS (GB)
(74) Representative: Dehns

(56) References cited:
- WO-A1-2006/017283
- WO-A1-2007/073364
- JP-A- H01 132 794
- US-A1- 2011 023 611
- US-A1- 2012 205 052

## Description

### Technical Field

The present disclosure relates to coated composite materials and methods of manufacturing coated composite materials.

### Background

Composite materials are used to make structural components for a wide range of applications including aerospace and defence, medical imaging, clean energy technology and advanced vehicle technology, e.g. marine, automotive and motorsport. High performance composite products might include transmission shafts, suspension components, fly wheels, prop shafts and drive shafts, hydraulic accumulators and fuel pipes. Composite materials, typically comprising carbon, Kevlar and/or glass fibre reinforcement in a polymer matrix are often selected over traditional metallic materials due to higher specific stiffness and strength as well as being lighter weight. Other desirable properties of composite materials can include tuneable thermal expansion coefficients, resistivity, and their suitability for applications with complex geometries and forms.

Composite materials can provide high specific strength and stiffness but are susceptible to abrasive or erosive wear, as well as offering limited thermal resistance. The limited surface functionality of composite materials can therefore prevent their use in applications where wear resistance or thermal/electrical properties are required. For this reason, application of a hard coating on a composite surface has currently drawn great interest in the aircraft industry due to weight savings, wear resistance and improved impact properties, together with increasing the hardness of the composite. These surface coatings enhance the surface qualities of a composite substrate to provide properties such as wear resistance, thermal barrier, EMI/RFI shielding and corrosion protection.

Hard coatings may be applied by a number of different processes, including thermal sprays like HVOF, plasma sprays, PVD, CVD, sputtering, electroplating, electroless plating, etc. Some of these techniques, such as electroplating, require the substrate surface, i.e. the surface to which the hard coating is to be applied, to be electrically conductive. Composite substrates typically lack the conductivity required for electroplating and thus require the use of additional interlayers of different materials. Typical interlayer combinations comprise: (i) an adhesive layer applied to the cured composite (e.g. an epoxy-based first layer); (ii) a nickel layer applied to the adhesive surface, e.g. via electroless plating; and (iii) a metal alloy layer to which the hard coating can then be applied using electroplating. The use of such interlayers renders the final part thicker and more costly due to processing time. Moreover, when failure occurs, it is generally caused by poor adhesion between one or more of the layers, either between one another or with the substrate or the top coating.

The need for multiple intermediate layers thus adds time and complexity to the coating process, and also increases the minimum achievable thickness of surface coatings.

It would be desirable to provide composite materials and coating methods for composite materials which address at least some of the problems outlined above.

WO 2007/073364 and US 2012/0205052 describe composite materials comprising a layer of non-electrically-conductive fibre-reinforced polymer and a layer of carbon fibre-reinforced polymer.

JPH01132794A discloses a composite material comprising a composite substrate and an electrically conductive layer.

### Summary

According to a first aspect, the present disclosure provides a composite material according to claim 1.

The conductive filaments provide a conductive surface layer onto which a further coating can be directly deposited. The conductivity of the layer is particular useful for some coating techniques such as electroplating which require the target to be conductive, but the conductive surface (more preferably a metal surface) also provides a good bonding layer for other deposition processes such as HVOF (High Velocity Oxygen Fuel) and plasma spraying techniques. Advantageously the conductive layer is provided directly on the composite substrate without the need for any further intermediate layers such as have been used previously.

In contrast to prior art materials, which incorporate multiple interlayers between the composite and the outer coating, the present disclosure provides coated composite materials which eliminate the multiple interlayers between the coated material and the substrate, thus resulting in a smaller or lighter final product. Elimination of the multiple interlayers also achieves cost savings due to the time and cost of applying multiple interlayers being avoided. Moreover, poor adhesion between various layers, e.g. between the resin interlayer applied after curing the substrate and the composite substrate is a drawback of the currently used methods. In particular, test results show adhesion failures at the multiple interlayers. The reduction in layers achieved by the present disclosure therefore reduces the likelihood of failure of the composite material. It will be appreciated that in aerospace applications, failure of the component may represent a significant safety hazard.

The diameter of the filaments may depend on the specific application, but in general for the optimum weight savings, the filament(s) are as small as is reasonably practical. In some examples the one or more filaments preferably have a diameter less than 1 mm and as low as 0.08 mm.

It will generally be advantageous to deposit a single filament, e.g. using a winding machine or process. A single filament ensures that the whole layer is electrically conductive. However, it will be appreciated that this may also be achieved by depositing several separate filaments, e.g. by winding a ribbon or bundle of parallel filaments. Equally the layer may be made up from several discontinuous filaments in which case electrical connection between the filaments may be achieved by other means, or it may not be necessary for coating processes that do not rely on conductivity.

In preferred examples the composite substrate and the conductive layer are bonded together via polymeric crosslinking. As noted above, poor adhesion between layers is a problem in existing materials. Effective mechanical interlock between the layers can be achieved using optimum roughness in some applications, but the secondary bonds on which this type of adhesion relies are relatively weak attractions between nearby atoms or molecules. In preferred examples of this disclosure, improved adhesion can be obtained by applying the conductive layer directly to the composite substrate while both layers are at least partially uncured. This means that a subsequent curing step cures both the composite substrate and the conductive layer together, resulting in improved adhesion between these layers due to the formation of covalent bonds via crosslinking of the polymeric matrix of the composite and the polymeric matrix of the conductive layer. Accordingly, processing defects such as delamination can be avoided. A coating layer such as a metallic coating may then be reliably adhered to a surface of a composite substrate without the need for multiple intermediate layers or graded layers.

Thus, in a preferred aspect, the conductive layer and the composite substrate are formed as a first layer and a second layer and the second layer is cured after it has been coated on a surface of the first layer. More preferably, the composite substrate is cured simultaneously with the conductive layer.

Curing involves the hardening of the polymeric material by cross-linking of polymer chains. This may be brought about using any suitable technique, preferably by heating. Any suitable time and temperatures may be used. Preferably, the conductive layer and/or the composite substrate are substantially fully cured, e.g. fully cured, in the products of the present disclosure and following the curing step of the present method, i.e. the crosslinking process is substantially complete.

Typical curing steps comprise heating to 100 to 200 °C, especially, 120 to 180 °C, e.g. 130 to 150 °C for 1 to 6 hours, preferably 2 to 4 hours.

The conductive filaments may be embedded within the polymeric matrix either before, during or after being applied to the composite substrate. For example, the filaments may be applied to the composite substrate and then the whole product dipped in a bath of polymeric matrix material. However, this may result in voids which are not adequately filled with the matrix material. Alternatively, the polymeric matrix material may be applied simultaneously with the application of the filaments. However, this can be a messy process and may result in a rough finish. For the smoothest finish and the most uniform filling between filaments it is preferred that the filaments are first coated with the polymeric matrix material and then both the filaments and their coating of polymeric matrix material are formed into the conductive layer simultaneously. This may be achieved by drawing the filaments through a bath of polymeric matrix material to coat them prior to forming into a layer. An additional step of submersion of the component in a polymer matrix bath may also be used if desired.

The presence of the conductive filaments in the conductive layer impart electrical conductivity to the surface of the coated composite material. The conductive filaments are therefore at least partially exposed at a surface of the conductive layer. The present disclosure therefore provides a coated composite material upon which a further coating may be applied directly, for example using electroplating.

Optionally, other materials may be present in the conductive layer, however, preferably the conductive layer consists essentially of the conductive filaments and the polymeric matrix.

Optionally, other layers may be formed between the composite substrate layer and the conductive layer to provide other properties. However, in some preferred examples, for minimum weight and bulk there are no intervening layers.

The polymeric matrix of the conductive layer can comprise (i.e. comprise, consist essentially of, or consist of) the same polymer(s) as, or different polymer(s) to, the polymeric matrix of the composite substrate. The polymeric matrix may comprise any suitable polymeric material as long as it is compatible with the composite substrate and will adequately adhere to a surface thereof. The matrix may consist of one or more types of polymer. Preferably, the polymeric matrix comprises a thermoset material. In one example the polymeric phase may consist of thermoset material(s) that are temperature-resistant. Examples of suitable polymers are epoxy resins, e.g. epoxy anhydrides, polyester resins, phenolic resins, vinyl esters; Bis-Maleimids (BMI); polyether ether ketones (PEEK); poly ether ketone-ketones (PEKK); polyphenylene sulfides (PPS); etc.

Most preferably, the polymer matrix comprises one or more polymers selected from epoxy resins, e.g. a cross-linked epoxy resin, such as an epoxy anhydride. The polymeric matrix of the composite substrate is preferably identical to that used in the conductive layer.

Other components such as curing agents, cross-linking agents, etc. may also be present in one or both of the polymer matrices.

The conductive filaments comprise metals. Preferred metals are Ag, Ni, Co, Cu and alloys and mixtures thereof, especially copper.

Preferably, the composite material of the present disclosure further comprises: a coating layer adhered to the outer surface of the conductive layer.

The surface texture of the conductive layer may be approximately homogenous overall, e.g. characterised by a definable texture depth or other texture parameter. It is also preferable for the conductive layer to have a repeatable thickness, e.g. when making composite materials for multiple components that must be coated within certain tolerance ranges. Preferably, the conductive layer has a substantially constant thickness. Typical average thicknesses for the conductive layer are 50 µm to 2000 µm, preferably 100 µm to 500 µm. The conductive layer is preferably at least substantially continuous.

The composite substrate may comprise a range of different materials for the polymeric matrix and fibre reinforcement. The composite substrate may be a laminate, or a carbon fibre reinforced polymer/plastic (CFRP). The polymeric matrix of the composite substrate may consist of one or more polymeric materials selected from, for example, those discussed above in relation to the polymer matrix of the conductive layer. The respective polymer matrices (i.e. that of the composite substrate and the conductive layer) may be different, but preferably they are identical or at least compatible with one another in order to facilitate cross-linking between the composite substrate and the conductive layer. The fibre reinforcement may consist of one or more of: glass fibres; carbon fibres; aramid e.g. Kevlar fibres. However it will be appreciated that the present disclosure will find use with a wide range of composite substrate materials.

The composite substrate may be produced via any suitable technique, e.g. filament winding, braiding, RTM, AFP, etc.

Further, as discussed herein, the disclosure provides a material in which a further coating is deposited on an outer surface of the conductive layer.

The coating layer adhered to the outer surface of the conductive layer may of course comprise one or more coating layers. However, it is an advantage of the present disclosure that the conductive layer enables a single coating layer to be adhered to a composite substrate without necessarily requiring multiple intervening layers for reliable deposition of the coating layer to be achieved. The coating layer may comprise any suitable material(s) which would impart the desired properties to the composite. Coating materials suitable for deposition on a surface of a composite substrate may include metals, alloys, ceramics (such as carbides, metal oxides etc.), and even plastics and composites.

Suitable hard coatings include metals and alloys, for example micro- or nano-crystalline metals and/or alloys or amorphous metal and/or alloy coatings. Preferably the coating comprises one or more metals selected from Ag, Al, Au, Co, Cr, Cu, Fe, Ni, Mo, Pd, Rh, Ru, Sn, Ti, W, Zn and Zr. The coating may also comprise one or more non-metallic elements, for example one selected from B, C, H, O, P and S. Especially preferred is a cobalt phosphorus alloy, for example nano-crystalline Co-P, which provides protection against corrosion and wear.

Carbide coatings may be chosen to provide hardness and wear resistance. For example, tungsten carbide may be an especially effective wear resistant coating, offering exceptionally high hardness levels (up to 74 HRC hardness). Tungsten carbide is also highly resistant to extreme temperatures up to 650 °C and corrosive environments. Metal oxides such as chromium oxide are also very hard and very resistant to chemical attack, so they may be applied as a coating layer when wear and corrosion are both present. Aluminium oxide and yttria-stabilised zirconia may be used as a coating material. Several metals (such as aluminium, zinc, tungsten, etc.) and even some plastics may also be used to provide a wear resistant coating layer. In one example the coating layer consists of a metallic, ceramic or composite thermal spray coating.

The coating layer(s) may be deposited on the outer surface of the conductive layer using any suitable coating technique. For example, the coating layer may be deposited by one or more other methods such as electroplating, physical vapour deposition, chemical vapour deposition or sputtering. The method and product of the present disclosure are particularly suited to coating techniques that require an electrically conductive substrate, e.g. electroplating and/or electroless plating.

Electroplating is a well-known method in the art for applying electrically conductive coatings to substrates. It involves the reduction of metal cations from a solution to form a coating of said metal on the cathode of an electrical circuit. Thus, the conductive layer of the present disclosure, more specifically the conductive filament(s) act as the cathode for any electroplating step. The anode will typically be made of the material to be plated on the part (or said material will be connected to the anode).

In general, prior to electroplating, cleaning of the electrode that needs to be plated is typically carried out in order to ensure good metal bond formation. In this disclosure, this may be achieved by the optional steps described above for enabling exposure of the conductive particles at the layer surface.

Typically the composite material comprising the conductive layer and the composite substrate will be placed in contact with the cathode and immersed in an electroplating solution. Any areas that are not intended to be coated may be masked. It will be understood that the materials selected as the cathode (e.g. the conductive filament(s)), the anode (e.g. the material to be applied as coating) and electrolyte should be compatible with each other according to the reactivity series.

Alternatively, or in addition, the coating layer(s) may be deposited by a thermal spraying technique. Suitable thermal spraying techniques may include, for example, wire arc spraying e.g. twin wire arc spraying (TWAS), high velocity oxy-fuel (HVOF) spraying, plasma spraying, flame spraying, detonation spraying, warm spraying.

Mechanical adhesion of the coating layer to the conductive layer may be tested using standard techniques such as a four-point bend test, for example, to test how many cycles in four-point bending can be undergone without delamination of the coating layer. The pull-off strength of a coating layer may be tested using standard methods such as outlined by e.g. ASTM D4541.

As is already discussed above, the presently disclosed method enables a coating layer to be consistently and reliably adhered to a surface of a composite substrate via the intervening conductive layer. Such a method may be readily automated to reduce labour and standardise manufacturing processes.

It will be appreciated that the disclosed method may take advantage of any of the materials described above in relation to the composite substrate, conductive layer and/or coating layer.

In one example, the disclosed method may further comprise preparing a surface of the composite substrate before the surface is coated with the conductive layer. For example, one or more surfaces of the composite substrate may be machined to precise dimensions if it is not keyed from as-moulded.

The present disclosure also extends to a coated composite material made according to the method(s) disclosed above.

The coated composite materials and manufacturing methods disclosed herein may be used to manufacture a wide range of composite components. Such coated composite materials may be particularly well-suited as multi-functional composites that can provide wear resistance in addition to high specific strength and stiffness. The present disclosure includes components made from a coated composite material, such as actuator cylinders for heavy duty use, automated suspension parts, wear rings, etc. Such coated composite components may find use in heavy duty vehicles, automotives, and actuation, landing gear and other aircraft applications that require wear resistance. The coated composite materials disclosed herein may be used to manufacture any wear resistant composite component, including new components, spare parts and retrofits.

According to this disclosure, various composite components may be made.

In some examples a composite component may comprise a cylinder of composite material as described above, wherein the conductive layer is formed on an outside surface of the cylinder. In other examples a composite component may comprise a hollow cylinder of composite material as described above, wherein the conductive layer is formed on an internal surface of the cylinder.

Thus the conductive layer may be formed either on the outside of a cylinder (which may be hollow, especially if formed by winding on a mandrel or the like) such as may be used for piston shafts or actuator rods, or on the inside of a hollow cylinder such as may be used as a piston bore or hydraulic cylinder. Each type of component may benefit from the addition of hard, wear-resistant coatings for improved component lifetimes.

According to another aspect of this disclosure there is provided a method of manufacturing a composite material, the method comprising: forming a conductive layer comprising one or more conductive filaments embedded in a polymeric matrix; forming a composite substrate comprising a polymeric matrix with fibre reinforcement; and curing the polymeric matrix of the conductive layer and the polymeric matrix of the composite substrate.

Preferably the polymeric matrix of the composite substrate and/or the conductive layer are at least partially uncured so that a single curing step causes cross-linking between the two matrices resulting in strong bonding as discussed above.

The order in which the conductive layer and the composite substrate are formed is flexible. In some preferred examples the conductive layer is formed first and the composite substrate layer is formed on top of the conductive layer. This order is most suitable for forming hollow cylinders such as actuator cylinder bores that require a coating to be formed on the inside surface (bore surface) of the cylinder. The conductive filament layer may be applied onto a tool, e.g. wound onto a mandrel in known fashion. The conductive filament layer is preferably wound as a high angle hoop winding (i.e. a tight helix) to provide a maximum surface coverage in a single layer. Although multiple layers of conductive filament may be deposited, a single layer will normally be most weight efficient. In examples where the electrical conductivity of the end product is important, it may be preferred to wind helically (i.e. at lower angle to the axis) rather than high angle hoop so as to reduce the resistance and/or inductance of the filament layer. The composite substrate may then be formed on top of the conductive layer by winding fibres coated in polymeric matrix onto the conductive layer in a similar fashion to the conventional mandrel winding techniques (the winding may be hoop winding for maximum circumferential strength, or the winding may be helical winding of various helix angles for greater tension/compression strength, or various combinations or layers of different winding styles).

In other examples, the composite substrate layer may be formed first and the conductive layer is formed on top of the composite substrate layer. The composite substrate may be formed by winding fibres coated in polymeric matrix (e.g. pre-preg fibres) onto a mandrel in known fashion (the winding may be hoop winding for maximum circumferential strength, or the winding may be helical winding of various helix angles for greater tension/compression strength, or various combinations or layers of different winding styles). The conductive filament layer is thenwound on top of the composite substrate layer. The conductive filament layer is preferably wound as a high angle hoop winding to provide a maximum surface coverage in a single layer. Although multiple layers of conductive filament may be deposited, a single layer will normally be most weight efficient. In examples where the electrical conductivity of the end product is important, it may be preferred to wind helically rather than high angle hoop so as to reduce the resistance and/or inductance of the filament layer. Such examples are most suited to shafts or rods such as actuator rods which require a coating on the exterior surface.

As discussed above, the composite substrate may be cured simultaneously with said conductive layer to bond the layers strongly together.

Also as discussed above, the method preferably further comprises: at least partially exposing the conductive filaments, e.g. by removing or displacing material from the conductive layer. The material removal or displacement may be by any suitable process such as etching or keying. These may result in a roughened surface which may be useful for bonding some types of coating. However, in other cases, especially for thinner coatings, a material removal technique that results in a smooth finish is preferred, such as grinding or honing.

Further, as also discussed above, the method may further comprise: depositing a coating layer on a surface of the conductive layer. The coating layer may be any of those described above.

According to a further aspect, this disclosure provides a composite material manufactured according to any of the methods described above.

According to yet a further aspect, this disclosure provides a composite component made from any of the composite materials described above.

### Brief Description of the Drawings

One or more non-limiting examples will now be described, with reference to the accompanying drawings, in which:
Figure 1 illustrates a cross-section of a coated composite material according to the prior art;
Figure 2 illustrates a cross-section of an exemplary coated composite material according to the present disclosure;
Figures 3a-3d illustrate a first example process for forming a hollow bore; and
Figures 4a-4d illustrate a second example process for forming a shaft.

### Detailed Description

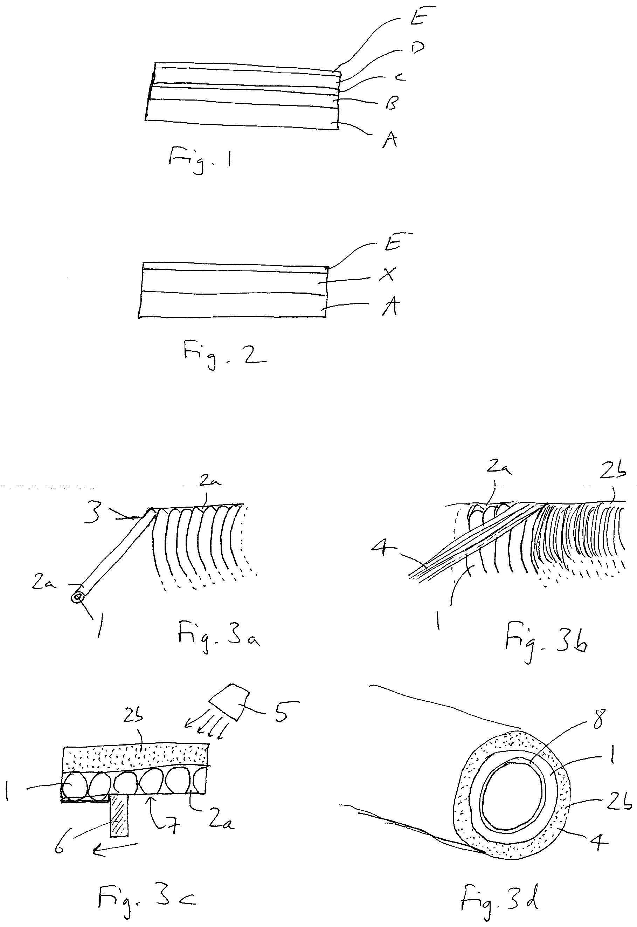

Figure 1 illustrates a prior art arrangement of a coated composite material comprising layers A to E. The lowermost composite substrate A is coated with intermediate layers B, C and D before an upper coating layer E, such as a metallic coating, is applied, e.g. by electroplating. The intermediate layer B is required to act as an adhesive enabling layer C to be bonded to the structure. Layer C is typically a nickel layer, applied by electroless plating and is required in order to provide a suitable surface for layer D, e.g. copper, to be applied via electroplating. Layer D is required in order to provide a suitable surface for applying the top coating layer. The intermediate layers B, C and D may add undesirable thickness to the surface of the composite substrate A and each layer adds undesirable cost and process time to the production of the end component.

Figure 2 illustrates a coated composite material according to an example of the present disclosure, wherein a composite substrate A is bonded to a conductive layer X before adhering a top coating layer E to the outer surface of the conductive layer X. Once the conductive layer X has been applied to a surface of the composite substrate A, the top coating layer E may be deposited using standard techniques such as electroplating, ensuring good adhesion of the top coating layer E. This example clearly demonstrates the advantage of fewer layers and thus reduced weight, cost and production time.

Figure 3a illustrates a first example process of winding a conductive filament 1 (such as copper wire) which has been pre-wetted with polymeric matrix 2a onto a mandrel 3. Figure 3b illustrates the second stage of winding fibres 4 such as carbon fibre (typically wound in bundles), also coated in polymeric matrix 2b over the conductive filament 1 to form the composite substrate. Figure 3c illustrates a curing stage (e.g. by application of heat or UV radiation) via curing apparatus 5 which simultaneously cures the polymer matrix 2a of the conductive layer and the polymer matrix 2b of the composite substrate (which may be the same or different) and a grinding stage in which grinding apparatus 6 removes a layer of material to expose the conductive filaments 1 (partially exposed and eroded filaments are indicated at 7). At least the grinding stage takes place after removal of the mandrel 3. The curing stage preferably takes place before mandrel removal. Figure 3d shows the end product with a hard coating 8 applied on the interior surface of the cylinder.

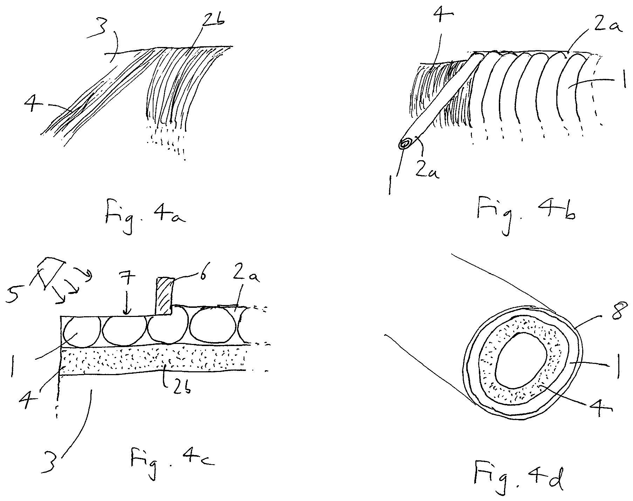

Figures 4a to 4d are similar to Figures 3a-3d, but illustrate a second example process in which the composite substrate is first filament wound onto a mandrel 3, then the conductive filament 1 wound over the top of the composite substrate before curing and grinding and mandrel removal to form the finished product with a hard coating 8 on the outside as shown in Figure 4d. In this process, the conductive filaments are essentially wound on as the last layer of the composite substrate windings.

As a variation to the process illustrated in Figs. 4a-4d, an alternative process for forming a conductive layer on the outside of a composite part is to cure the composite substrate layer prior to winding on the conductive filaments. The cured substrate layer may also be machined (e.g. honed or ground) to provide a more even (e.g. straighter) surface finish before winding on the conductive filaments. This means that the conductive layer does not need to be laid as thickly in order to achieve a complete conductive layer.

The conductive filaments may benefit from a further physical or chemical treatment such as a corona treatment in order to aid the bonding to the resin system.

## Claims

1. A composite material comprising:
a composite substrate (A) comprising a polymeric matrix (2b) with fibre reinforcement (4); and
an electrically conductive layer (X);
**characterized in that** the electrically conductive layer comprises one or more wound metal filaments (1) embedded in a polymeric matrix (2a) and said wound metal filament is at least partially exposed at a surface of the electrically conductive layer.

2. A composite material as claimed in claim 1, wherein the one or more filaments (1) have a diameter less than 1 mm, preferably less than 0.5 mm, preferably at least 0.08 mm in diameter.

3. A composite material as claimed in claim 1, wherein the composite substrate (A) and the electrically conductive layer (X) are bonded together via polymeric crosslinking.

4. A composite material as claimed in any one of the preceding claims, wherein the polymeric matrix (2b) of the composite substrate (A) and/or the polymeric matrix (2a) of the electrically conductive layer (X) comprises an epoxy anhydride.

5. A composite material according to any preceding claim, further comprising:
a coating layer (E) adhered to the outer surface of the electrically conductive layer (X).

6. A composite material as claimed in claim 5, wherein the coating layer (E) comprises a nano-crystalline Co-P alloy.

7. A composite component comprising a cylinder of composite material as claimed in any preceding claim, wherein the electrically conductive layer (X) is formed on an outside surface of the cylinder.

8. A composite component comprising a hollow cylinder of composite material as claimed in any of claims 1 to 7, wherein the electrically conductive layer (X) is formed on an internal surface of the cylinder.

9. A method of manufacturing a composite material, the method comprising:
forming an electrically conductive layer (X);
forming a composite substrate (A) comprising a polymeric matrix (2b) with fibre reinforcement (4); and
curing the polymeric matrix of the electrically conductive layer and the polymeric matrix of the composite substrate;
**characterized by** the electrically conductive layer (X) comprising one or more wound metal filaments (1) embedded in a polymeric matrix (2a) and by at least partially exposing the wound metal filament.

10. A method as claimed in claim 9, wherein the conductive layer (X) is formed first and the composite substrate layer (A) is formed on top of the electrically conductive layer.

11. A method as claimed in claim 9, wherein the composite substrate layer (A) is formed first and the electrically conductive layer (X) is formed on top of the composite substrate layer.

12. A method as claimed in any of claims 9 to 11, wherein the composite substrate (A) is cured simultaneously with said electrically conductive layer (X).

13. A method as claimed in any of claims 9 to 12, wherein:
at least partially exposing the wound metal filament (1) comprises removing material from the electrically conductive layer (X).

14. A method as claimed in any of claims 9 to 13, further comprising:
depositing a coating layer (E) on a surface of the electrically conductive layer (X).

## Patentansprüche

1. Verbundstoffmaterial, umfassend:
ein Verbundstoffsubstrat (A), umfassend eine polymere Matrix (2b) mit Faserverstärkung (4); und
eine elektrische leitende Schicht (X);
**dadurch gekennzeichnet, dass** die elektrisch leitende Schicht einen oder mehrere gewickelte Metalldrähte (1) umfasst, die in eine polymere Matrix (2a) eingebettet sind und der Metalldraht mindestens teilweise an einer Fläche der elektrisch leitenden Schicht exponiert ist.

2. Verbundstoffmaterial nach Anspruch 1, wobei der eine oder die mehreren Drähte (1) einen Durchmesser von weniger als 1 mm, vorzugsweise weniger als 0,5 mm, vorzugsweise mindestens 0,08 mm Durchmesser aufweisen.

3. Verbundstoffmaterial nach Anspruch 1, wobei das Verbundstoffsubstrat (A) und die elektrisch leitende Schicht (X) über polymeres Vernetzen aneinander gebunden sind.

4. Verbundstoffmaterial nach einem der vorstehenden Ansprüche, wobei die polymere Matrix (2b) des Verbundstoffmaterialsubstrats (A) und/oder die polymere Matrix (2a) der elektrisch leitenden Schicht (X) ein Epoxidanhydrid umfasst/umfassen.

5. Verbundstoffmaterial nach einem der vorstehenden Ansprüche, ferner umfassend:
eine Beschichtungsschicht (E), die an die äußere Fläche der elektrisch leitenden Schicht (X) geklebt ist.

6. Verbundstoffmaterial nach Anspruch 5, wobei die Beschichtungsschicht (E) eine nanokristalline Co-P-Legierung umfasst.

7. Verbundstoffkomponente, umfassend einen Zylinder eines Verbundstoffmaterials nach einem der vorstehenden Ansprüche, wobei die elektrisch leitende Schicht (X) an einer Außenseite des Zylinders gebildet ist.

8. Verbundstoffkomponente, umfassend einen hohlen Zylinder eines Verbundstoffmaterials nach einem der Ansprüche 1 bis 7, wobei die elektrisch leitende Schicht (X) an einer inneren Fläche des Zylinders gebildet ist.

9. Verfahren zum Herstellen eines Verbundstoffmaterials, wobei das Verfahren Folgendes umfasst:
Bilden einer elektrische leitenden Schicht (X);
Bilden eines Verbundsubstrats (A), das eine polymere Matrix (2b) mit Faserverstärkung (4) umfasst; und
Härten der polymeren Matrix der elektrisch leitenden Schicht und
der polymeren Matrix des Verbundstoffsubstrats;
**dadurch gekennzeichnet, dass** die elektrisch leitende Schicht (X) ein oder mehrere gewickelte Metalldrähte (1) umfasst, die in eine polymere Matrix (2a) eingebettet sind und dadurch, dass es den gewickelte Metalldraht mindestens teilweise exponiert.

10. Verfahren nach Anspruch 9, wobei die leitende Schicht (X) zuerst gebildet ist und die Verbundstoffsubstratschicht (A) auf der elektrisch leitenden Schicht gebildet ist.

11. Verfahren nach Anspruch 9, wobei die Verbundstoffsubstratschicht (A) zuerst gebildet ist und die elektrisch leitende Schicht (X) auf der Verbundstoffsubstratschicht gebildet ist.

12. Verfahren nach einem der Ansprüche 9 bis 11, wobei das Verbundstoffsubstrat (A) zeitgleich mit der elektrisch leitenden Schicht (X) gehärtet wird.

13. Verfahren nach einem der Ansprüche 9 bis 12, wobei:
ein mindestens teilweises Exponieren des gewickelten Metalldrahts (1) ein Entfernen von Material von der elektrisch leitenden Schicht (X) umfasst.

14. Verfahren nach einem der Ansprüche 9 bis 13, ferner umfassend:
Ablagern einer Beschichtungsschicht (E) auf einer Fläche der elektrisch leitenden Schicht (X).

## Revendications

1. Matériau composite comprenant :
un substrat composite (A) comprenant une matrice polymère (2b) à renfort fibreux (4) ; et
une couche électriquement conductrice (X) ;
**caractérisé en ce que** la couche électriquement conductrice comprend un ou plusieurs filaments métalliques enroulés (1) noyés dans une matrice polymère (2a) et ledit filament métallique enroulé est au moins partiellement exposé à une surface de la couche électriquement conductrice.

2. Matériau composite selon la revendication 1, dans lequel les un ou plusieurs filaments (1) ont un diamètre inférieur à 1 mm, de préférence inférieur à 0,5 mm, de préférence au moins 0,08 mm de diamètre.

3. Matériau composite selon la revendication 1, dans lequel le substrat composite (A) et la couche électriquement conductrice (X) sont liés ensemble via une réticulation polymère.

4. Matériau composite selon l'une quelconque des revendications précédentes, dans lequel la matrice polymère (2b) du substrat composite (A) et/ou la matrice polymère (2a) de la couche électriquement conductrice (X) comprend un anhydride époxy.

5. Matériau composite selon une quelconque revendication précédente, comprenant en outre :
une couche de revêtement (E) collée à la surface externe de la couche électriquement conductrice (X).

6. Matériau composite selon la revendication 5, dans lequel la couche de revêtement (E) comprend un alliage Co-P nanocristallin.

7. Composant composite comprenant un cylindre de matériau composite selon une quelconque revendication précédente, dans lequel la couche électriquement conductrice (X) est formée sur une surface extérieure du cylindre.

8. Composant composite comprenant un cylindre creux en matériau composite selon l'une quelconque des revendications 1 à 7, dans lequel la couche électriquement conductrice (X) est formée sur une surface interne du cylindre.

9. Procédé de fabrication d'un matériau composite, le procédé comprenant :
la formation d'une couche électriquement conductrice (X) ;
la formation d'un substrat composite (A) comprenant une matrice polymère (2b) à renfort fibreux (4) ; et
le durcissement de la matrice polymère de la couche électriquement conductrice et de la matrice polymère du substrat composite ;
**caractérisé par** la couche électriquement conductrice (X) comprenant un ou plusieurs filaments métalliques enroulés (1) noyés dans une matrice polymère (2a) et par l'exposition au moins partielle du filament métallique enroulé.

10. Procédé selon la revendication 9, dans lequel la couche conductrice (X) est formée en premier et la couche de substrat composite (A) est formée au-dessus de la couche électriquement conductrice.

11. Procédé selon la revendication 9, dans lequel la couche de substrat composite (A) est formée en premier et la couche électriquement conductrice (X) est formée au-dessus de la couche de substrat composite.

12. Procédé selon l'une quelconque des revendications 9 à 11, dans lequel le substrat composite (A) est durci simultanément avec ladite couche électriquement conductrice (X).

13. Procédé selon l'une quelconque des revendications 9 à 12, dans lequel :
l'exposition au moins partielle du filament métallique enroulé (1) comprend le retrait de matière de la couche électriquement conductrice (X).

14. Procédé selon l'une quelconque des revendications 9 à 13, comprenant en outre :
le dépôt d'une couche de revêtement (E) sur une surface de la couche électriquement conductrice (X).
